# NOUVEAU FASCICULE DE BREVET EUROPEEN

(11) **EP 0 733 511 B2**
(45) Date de publication et mention de la décision concernant l'opposition: **14.07.2004**
(45) Mention de la délivrance du brevet: 02.06.1999
(21) Numéro de dépôt: 96460015.9
(22) Date de dépôt: 22.03.1996
(51) Int. Cl.: B60P 1/28

(54) **Benne de stockage et de transport de matériaux tels que notamment des enrochements et ensemble intégrant une telle benne**
Transportkübel zur Lagerung und zum Transport von Materialien, insbesondere von Steinen und mit einem solchen Transportkübel ausgerüstete Anlage
Skip for storing and transporting materials, especially rocks, and unit incorporating such a skip

(30) Priorité: 22.03.1995 FR 9503581; 19.05.1995 FR 9506275
(43) Date de publication de la demande: 25.09.1996
(73) Titulaire: Sauvion, Jean-Pierre, 44140 La Planche (FR)
(72) Inventeur: Sauvion, Jean-Pierre, 44140 La Planche (FR)
(74) Mandataire: Le Faou, Daniel

(56) Documents cités:
- EP-A- 0 374 336
- EP-A- 0 703 115
- DE-A- 2 408 336
- GB-A- 915 481
- US-A- 3 844 616
- Plan Bennes Manjot 16300054
- Procès Verbal de Constat d huissier no.4414075-11400

## Description

Le domaine de l'invention est celui des bennes de stockage et de transport de matériaux de construction ou de remblai.

Plus précisément, l'invention se rapporte aux bennes utilisées pour permettre le stockage et le transport de matériaux lourds tels que les enrochements, qui se présentent généralement sous forme de blocs de pierre présentant par exemple une masse de 1 à 25 tonnes. Ces bennes sont habituellement destinées à être rapportées sur des châssis de camions ou de remorques, routières ou ferroviaires par exemple, le cas échéant avec possibilité de basculement pour le déchargement.

Les matériaux lourds tels que les enrochements ne peuvent être transportés par des bennes de conception classique. Les bennes classiques sont en effet adaptées au transport de matériaux tels que le gravier ou le sable présentant une granulométrie généralement inférieure à 1 cm. Or le gravier ou le sable présentent d'une part une densité plus faible que les pierres constituant les enrochements mais aussi une fluidité leur permettant d'être aisément chargés dans de telles bennes, alors que les enrochements sont beaucoup plus difficiles à manier du fait même qu'ils sont constitués par des blocs massifs.

Pour ces raisons, les bennes à enrochements doivent présenter des caractéristiques mécaniques leur permettant de résister au poids de tels enrochements ainsi qu'aux chocs occasionnés lors du chargement et du déchargement de ces matériaux.

Actuellement, les bennes utilisées pour le transport de matériaux lourds, tels que les enrochements, sont des bennes spéciales adaptées aux contraintes spécifiques liées à la nature et particulièrement à la masse de ces enrochements. Afin qu'elles puissent résister aux chocs lors du chargement, supporter des poids élevés, et présenter une durée de vie suffisante, on utilise généralement pour les fabriquer des tôles présentant une épaisseur plus importante que celles utilisées pour la fabrication de bennes destinées au transport de matériaux classiques du type graviers ou sable. Typiquement, ces tôles présentent une épaisseur de 10 à 15 mm, au lieu d'un ordre de grandeur de l'ordre de 5 mm pour les bennes classiques.

L'emploi de tôles épaisses permet d'augmenter considérablement la résistance mécanique des parois mais présente aussi l'inconvénient d' augmenter sensiblement le poids de la benne et ainsi de réduire d'autant la charge utile que peut supporter le châssis de transport sur lequel elle est montée. DE-A-2408336 propose de pourvoir une benne classique avec une pluralité de renforts formés dans sa masse, ce qui implique le même inconvénient.

Par ailleurs, l'emploi de bennes différentes en fonction des matériaux transportés, à savoir d'une part les bennes classiques pour les matériaux de faible granulométrie tels que le sable ou le gravier, et d'autre part les bennes spécialisées pour les enrochements, induit des coûts de matériels, et donc de transport, élevés. En effet, un transporteur amené à transporter les deux types de matériaux (enrochements et matériaux à faible granulométrie) doit avoir à sa disposition au moins une benne à enrochements, celle-ci pouvant également éventuellement être utilisée pour transporter des matériaux à faible granulométrie. Or, une benne à enrochements présente un coût de revient beaucoup plus élevé qu'une benne classique pour matériaux à faible granulométrie, et implique, comme déjà précisé ci-dessus, une réduction très sensible de la charge utile, ce qui rend une telle benne peu rentable pour transporter des matériaux classiques. Le transporteur devra donc le plus souvent avoir à sa disposition d'une part au moins une benne à enrochements et d'autre part au moins une benne classique.

L'invention a notamment pour objectif de pallier ces différents inconvénients de l'état de la technique.

Plus précisément, la présente invention a pour objectif de fournir une conception de bennes à enrochements à coût de revient réduit, présentant en particulier un profil et des caractéristiques mécaniques optimisés autorisant notamment un gain sensible en poids de l'ensemble (et donc une augmentation corrélative de la charge utile disponible pour un châssis de transport donné).

Un autre objectif de l'invention est de fournir une telle benne qui offre des conditions d'exploitations acceptables pour un usage mixte (matériaux à faible granulométrie d'une part et enrochements d'autre part).

Ces différents objectifs, ainsi que d'autres qui apparaîtront par la suite, sont atteints selon l'invention au moyen d'une benne basculante de stockage et de transport de matériaux tels que des enrochements, constituée d'un réceptacle ouvert en tôles soudées formant une paroi de stockage de section en arc-de-cercle, ladite benne étant caractérisée en ce qu'elle présente :
- une tôle de contre-coup et de rigidité accolée de façon solidaire à une portion de la paroi de fond de ladite benne de façon essentielle nt continue et symétrique par rapport au plan vertical de symétrie de celle-ci, cette tôle de contre-coup et de rigidité s'étendant en direction longitudinale sur toute la longueur de la benne ;
- deux piétements longitudinaux s'étendant essentiellement parallèlement à son axe longitudinal, lesdits piètements longitudinaux constituant un cadre autoporteur et étant conçus pour pouvoir reposer sur les longerons d'un châssis et écartés pour s'adapter à différentes tailles de châssis ;
- des rebords latéraux constitués chacun par un profilé à section fermée solidarisé à la portion supérieure de ladite paroi, une tôle de contre-coup étant solidarisée à au moins une portion desdits rebords latéraux ;
- au moins une paire de renforts latéraux formant raidisseurs, disposés symétriquement de part et d'autre du plan vertical longitudinal de la benne et étant constitués par des tôles solidarisées à la paroi, aux profilés et auxdits piètements longitudinaux et formant avec ceux-ci des assemblage en triangulation.

La conception de la benne à enrochements selon l'invention résulte donc d'une volonté de repenser les contraintes de résistance des structures, pour aboutir à une optimisation des qualités requises en matière de rigidité et de résilience, et implique l'utilisation d'une paroi concave en tôle soudée de section en arc-de cercle de façon à offrir un profil continu de "glissement", et localement pourvue de tôles de contre-coup accolées. En disposant sélectivement les tôles de contre-coup à certains endroits exposés de la paroi de benne, on leur fait jouer un rôle dynamique de renforcement de la résistance aux chocs, à la fatigue et à l'usure, et on obtient ainsi les performances recherchées à un coût de revient et pour un poids total extrêmement compétitifs par rapport à l'existant. Il en résulte de plus la possibilité pour l'utilisateur d'une utilisation mixte de la benne, à savoir autant pour les enrochements et matériaux lourds, que pour des matériaux pulvérulents ou de plus faible densité, voire pour d'autres types d'utilisations.

On notera qu'il avait déjà été proposé dans l'état de la technique des bennes de section en arc-de-cercle ne présentant ni tôle de contre-coup, ni renforts latéraux, ni piètements longitudinaux. Une benne de ce type est notamment décrite dans la demande de brevet EP 0374336.

Selon une variante particulièrement intéressante de l'invention, ladite tôle de contre-coup remonte jusqu'à une hauteur prédéterminée sur les flancs de ladite benne, de façon à s'étendre latéralement par rapport au plan vertical de symétrie de ladite benne, selon un angle d'ouverture (α) compris entre environ 30° et environ 50° mesuré depuis le centre du plan horizontal supérieur de la benne.

Dans un mode de réalisation préférentiel de l'invention, lesdites tôles (tôle de contre-coup et tôles soudées constituant la paroi de stockage concave) présentent une épaisseur d'environ 5 mm et sont réalisées en alliage anti-choc d'une dureté de l'ordre de 400 HB à 500 HB. De telles tôles présentent une bonne résistance aux chocs et au martelage.

Les piétements longitudinaux renforcent la rigidité de la benne et plus précisément renforcent sa rigidité longitudinale. Ils permettent également le renvoi des efforts verticaux transmis par les parois latérales de la benne au niveau du châssis ou du faux-châssis sur lequel est destinée à être montée ladite benne.

Avantageusement, l'élément de tôle de contre-coup prévu au niveau du fond de la benne est monobloc avec lesdits piétements longitudinaux. Le cadre autoporteur constitue alors un support inférieur rigide (anti-déformation) de la tôle de contre-coup, et donc de l'ensemble de la benne.

On notera également que ledit cadre autoporteur pourra comporter également au moins deux traverses coopérant avec lesdits piétements longitudinaux. Les piétements et les traverses formeront ainsi une structure de renfort rectangulaire adaptée à la forme générale de la benne.

Lors du basculement de la benne, le cadre autoporteur et la tôle de contrecoup assurent la rigidité de la benne pendant l'opération de déchargement des matériaux transportés.

La benne selon l'invention étant montée basculante, on pourra utiliser un compas hydraulique pour faire basculer la benne. Dans ce cas, lesdits piètements longitudinaux pourront avantageusement être prolongés par des fers constituant des points d'ancrage d'un tel compas hydraulique. Ces fers pourront notamment présenter une forme en U ou en C et pourront être interchangés de façon à s'adapter à différents type de compas hydrauliques.

On notera également que lesdits piètements longitudinaux pourront être plus ou moins écartés de façon à convenir à différents châssis. Un tel écartement pourra varier notamment de 600 à 1500 millimètres de façon à assurer une compatibilité avec des châssis de 980 ou de 1200 millimètres.

Selon l'invention, les rebords latéraux de la benne sont constitués par un profilé à section fermée solidarisé à la portion supérieure de ladite paroi ("profilés de bordure"). Chacun des profilés latéraux est avantageusement constitué d'une tôle repliée, présentant un angle au sommet. La tôle repliée est solidarisée à la paroi de benne à ses deux extrémités, de façon à "fermer" la section en coupe. De telle caractéristiques permettent de résoudre les problèmes posés par cette zone particulièrement sensible de la benne, puisque soumise aux chocs lors des opérations de chargement. Du fait de l'utilisation d'une forme de profilé à section fermée, on contribue en outre encore à la rigidification de la benne.

Toujours, selon l'invention, une tôle de contre-coup est accolée à au moins une portion des bords latéraux supérieurs internes de la benne. Préférentiellement, ladite tôle de contre-coup est alors constituée par une portion de recouvrement entre d'une part une face dudit profilé formant rebord supérieur et d'autre part une portion y accolée de la paroi de benne.

Toujours selon l'invention, la benne présente une paire de renforts latéraux formant raidisseurs qui contribuent à la rigidité de la paroi en tôles soudées qui pourrait sans cela rester sensible au vrillage et aux déformations en "banane".

D'une manière générale, on notera que la résistance globale de la paroi concave de stockage est renforcée par l'action complémentaire ou combinée des renforts latéraux avec les profilés de bordure et les piètements longitudinaux précités. La présence de ces structures de renfort permet d'améliorer les conditions du compromis entre les caractéristiques de résistance et de poids des tôles constitutives de la paroi de stockage, et la tenue mécanique globale de la benne.

Cette tenue mécanique de la benne est renforcée dès lors que lesdits renforts latéraux sont des éléments de tôles assemblés à l'ensemble constitué de ladite paroi concave, des profilés de bordure et des piètements longitudinaux de façon à constituer des assemblages en triangulation.

Selon une autre caractéristique préférentielle de l'invention, la benne est équipée dans sa partie arrière d'un hayon basculable formant paroi de fermeture arrière, et susceptible de s'escamoter lors du basculement de la benne pour permettre le déchargement des matériaux transportés.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente une vue en perspective d'un mode de réalisation de l'invention ;
- la figure 2 présente deux demi-vues en coupe de la benne de la figure 1, correspondant pour la moitié gauche à une coupe transversale de la benne au niveau d'un renfort latéral, et pour la moitié droite à une coupe transversale au niveau des raidisseurs arrière ;
- la figure 3 représente une variante de piètement.

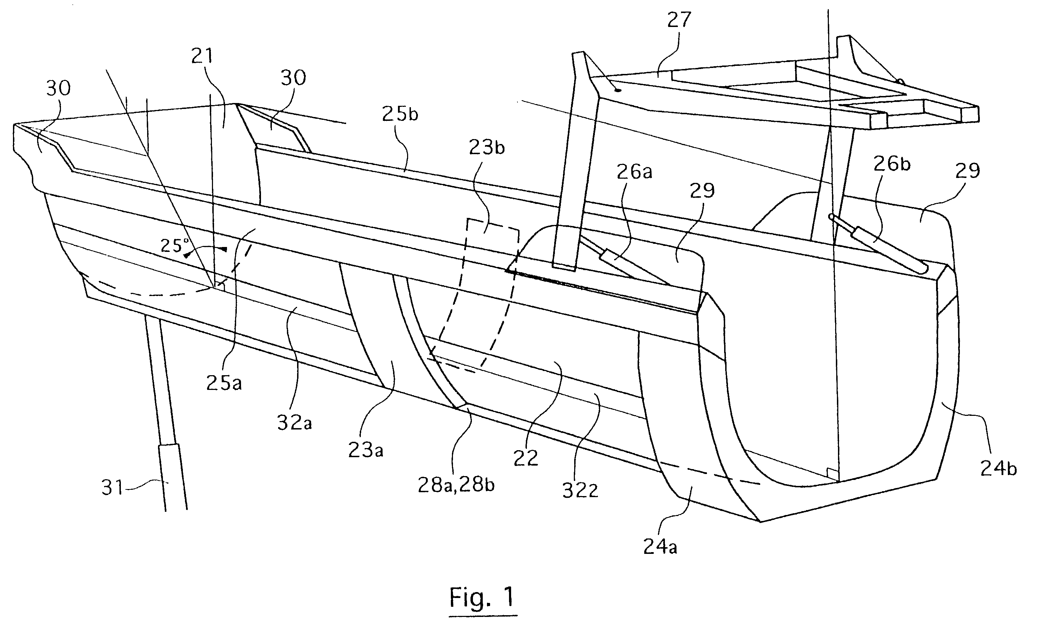

Dans le mode de réalisation de la figure 1, la benne selon l'invention est constituée d'une paroi 22 en tôles soudées bord à bord et formant un ensemble cintré.

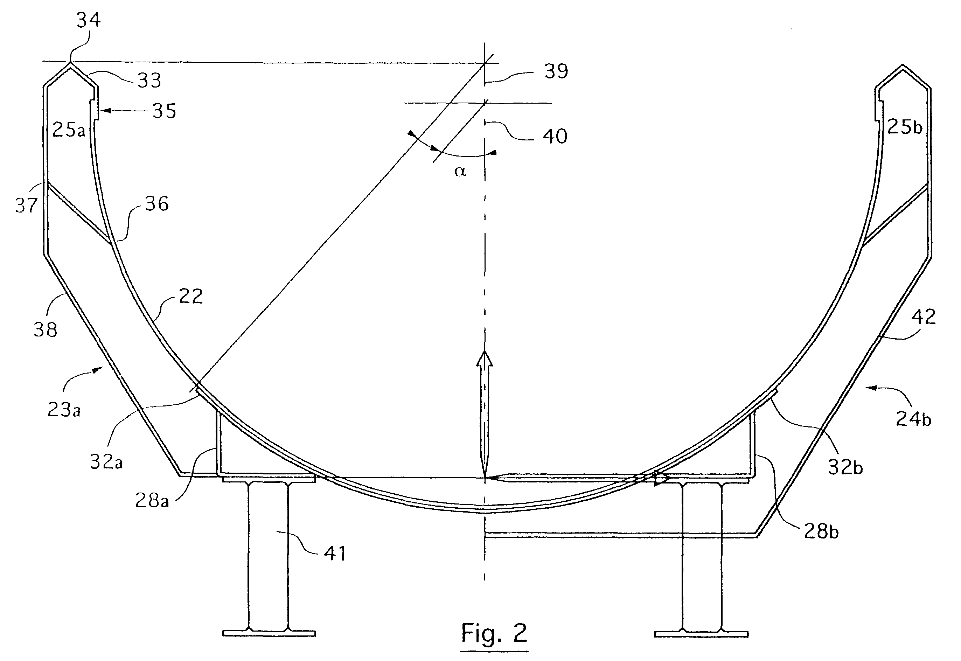

La paroi 22 est assemblée à un certain nombre de composants complémentaires de la benne, à savoir :
- une face avant 21 assurant la fermeture de la benne dans sa partie antérieure, et qui peut être dressée de façon verticale ou en inclinaison (par exemple selon un angle de 25° par rapport à la verticale) ;
- deux profilés de bordure 25a, 25b, s'étendant longitudinalement et symétriquement sur les rebords supérieurs de la paroi 22 ;
- deux paires de renforts latéraux 23a, 23b et 24a, 24b.
- un hayon 27 monté articulé dans la zone arrière de la benne, et susceptible d'être basculé au moyen de vérins 26a, 26b pour venir ouvrir ou fermer la benne dans sa partie arrière au niveau des renforts latéraux 24a, 24b formant raidisseur arrière et siège de réception du hayon 27 ;
- des piètements longitudinaux 28a, 28b (mieux visibles en Fig. 2) s'étendant symétriquement dans la partie inférieure de la benne;
- des éléments de tôle de contre-coup 32a, 32b garnissant la partie inférieure des flancs de la paroi 22.

Tous ces différents éléments, en sus de leur fonctionnalité propre, contribuent à la tenue mécanique et à la rigidité d'ensemble de la benne. Ainsi on combine la relative "légèreté" des tôles constitutives de la paroi 22 (par exemple des tôles en alliage anti-choc et anti-abrasion de type HARDOX 400 (marque déposée) d'une dureté de l'ordre de 400 HB, et présentant par exemple une épaisseur de 5 mm environ), avec les effets de renfort des différents autres éléments qui jouent leur rôle à des emplacements de la benne sélectivement adaptés.

Dans le mode de réalisation représenté aux figures 1 et 2, la benne présente également une section transversale cintrée, et plus précisément en arc de cercle. Ce cintrage des parois internes de la benne permet de limiter le martèlement des parois 22 lors du chargement des blocs d'enrochement. En effet, la plupart des blocs ne tomberont pas directement mais glisseront le long des parois incurvées pour venir reposer au fond de la benne ou bien s'empiler sur des blocs préalablement chargés.

La benne est avantageusement munie, à l'avant et à l'arrière, "de garde-fous" 29, 30 dans sa partie supérieure.

Enfin, les cornières 28a, 28b formant les piètements longitudinaux forment un cadre autoporteur - comprenant également le cas échéant des traverses (non représentées) pontées entre les deux piètements - qui autorise le basculement de la benne au moyen d'un vérin 31 prenant appui sur un châssis (non représenté).

La géométrie, et les modalités d'assemblage des différents éléments constitutifs de la benne apparaissent plus clairement en Fig. 2.

Les profilés de bordure 25a, 25b sont constitués par un profilé à section fermée solidarisé à la portion supérieure de la paroi 22. Dans le mode de réalisation représenté en demi-vue de gauche, le profilé latéral est constitué d'une tôle repliée 33, présentant un angle au sommet 34. La tôle repliée 33 est solidarisée à la paroi 22 de benne à ses deux extrémités, à savoir d'une part au niveau d'une jonction en recouvrement 35 dans la zone haute de la paroi 22, et d'autre part en contrebas de ladite zone le long d'une ligne de soudure 36. On obtient ainsi un profil "fermé" apte à rigidifier cette zone de la benne.

La jonction en recouvrement 35 permet à la portion correspondante de la tôle 33 de jouer le rôle de tôle de contre-coup, qui accroît la résistance de cette zone sensible aux coups et aux déformations.

En outre, la tôle repliée 33 est reprise dans sa parie inférieure le long d'une ligne de soudure 37 par une tôle de renfort 38 qui constitue le raidisseur central 23a. Cette tôle de renfort 38 vient en reprise dans sa partie basse (par soudure ou équivalent) sur la cornière longitudinale 28a formant piètement longitudinal et/ou cadre autoporteur de la benne.

Il y a donc coopération et synergie entre ces différents éléments de façon à multiplier les effets de triangulation qui sont favorables à la tenue mécanique de l'ensemble.

La cornière longitudinale 28 est quant à elle rapportée et solidarisée (par exemple par soudage, ou tout autre procédé adéquat) à la tôle de contre-coup inférieure 32a.

Dans un autre mode de réalisation, la tôle de contre-coup 32a peut être monobloc avec le piètement longitudinal 28a.

La tôle de contre-coup 32a se prolonge symétriquement de façon continue vers le flanc opposé de la paroi 22 (portion 32b). Elle remonte sur les flancs de la benne jusqu'à une hauteur prédéterminée qui, peut être définie par un angle α par rapport au plan vertical de symétrie 39 et à partir d'un point 40 de ce plan 39 situé sensiblement au niveau des rebords extérieurs latéraux 25a, 25b de la benne. L'angle α peut à titre indicatif préféré être compris entre 30° et 50° environ.

La cornière longitudinale 28a, quant à elle, sert de piètement support pour la benne, et vient reposer sur la tête d'un longeron 41 du châssis de transport. La liaison entre la cornière 28a et le longeron 41 est un simple appui.

Dans la demi-vue droite de la figure 2, le profilé raidisseur 24a est constitué d'une tôle 42 qui vient encadrer la paroi 22 dans toute sa partie inférieure, afin de constituer un profil de terminaison arrière de la benne.

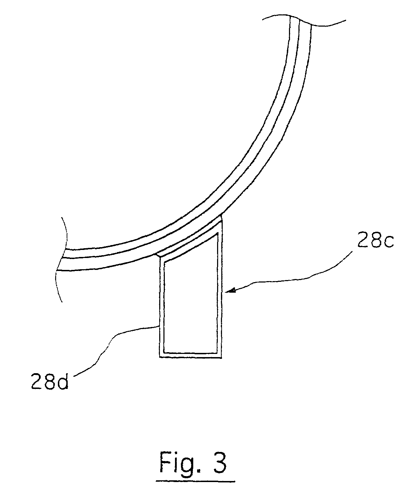

En référence à la figure 3, une variante de piètement 28 c est représentée, celui-ci incluant un fer 28d destiné à servir de point d'ancrage à un dispositif de levage du type d'un compas hydraulique. L'autre piètement (non représenté) est bien sûr de forme similaire. Le fer 28 d se présente sous la forme d'une pièce en C et peut être interchangée pour adapter le dispositif à différents types de dispositif de levage.

Le mode de réalisation ici décrit n'a pas pour objet de réduire la portée de l'invention. Il pourra donc y être apporté des modifications sans sortir du cadre de l'invention tel que défini par les revendications.

## Revendications

1. Benne basculante de stockage et de transport de matériaux tels que des enrochements, constituée d'un réceptacle ouvert en tôles soudées formant une paroi (22) de stockage de section en arc-de-cercle, ladite benne étant **caractérisée en ce qu'**elle présente :
- une tôle de contre-coup et de rigidité (32a,32b) accolée de façon solidaire à une portion de la paroi de fond de ladite benne de façon essentiellement continue et symétrique par rapport au plan vertical de symétrie de celle-ci cette tôle de contre-coup et de rigidité s'étendant en direction longitudinale sur toute la longueur de la benne ;
- deux piétements longitudinaux (28a,28b) s'étendant essentiellement parallèlement à son axe longitudinal, lesdits piètements longitudinaux constituant un cadre autoporteur et étant conçus pour pouvoir reposer sur les longerons (41) d'un châssis et écartés pour s'adapter à différentes tailles de châssis ;
- des rebords latéraux constitués chacun par un profilé à section fermée (25a, 25b) solidarisé à la portion supérieure de ladite paroi (22), une tôle de contre-coup (35) étant solidarisée à au moins une portion desdits rebords latéraux ;
- au moins une paire de renforts latéraux formant raidisseurs (23a, 23b ; 24a, 24b), disposés symétriquement de part et d'autre du plan vertical longitudinal (39) de la benne et étant constitués par des tôles solidarisées à la paroi (22), aux profilés (25a,25b) et auxdits piètements longitudinaux (28a, 28b) et formant avec ceux-ci des assemblage en triangulation.

2. Benne selon la revendication 1, **caractérisée en ce que** ladite tôle de contre-coup (32a,32b) remonte jusqu'à une hauteur prédéterminée sur les flancs de ladite benne, de façon à s'étendre latéralement par rapport au plan vertical de symétrie de ladite benne, selon un angle d'ouverture (α) compris entre environ 30° et environ 50° mesuré depuis le centre du plan horizontal supérieur de la benne.

3. Benne selon l'une quelconque des revendications 1ou 2, **caractérisée en ce que** lesdites tôles présentent une épaisseur d'environ 5 mm et sont réalisées en alliage anti-choc d'une dureté de l'ordre de 400 HB à 500 HB.

4. Benne selon l'une des revendications 1 à 3, **caractérisée en ce que** ladite tôle de contre-coup (32a,32b) est monobloc avec lesdits piétements longitudinaux (28a,28b).

5. Benne selon l'une des revendications 1 à 4 **caractérisée en ce que** ledit cadre autoporteur comporte également au moins deux traverses coopérant avec lesdits piétements longitudinaux (28a,28b).

6. Benne selon l'une des revendications 1 à 5 **caractérisée en ce que** lesdits piètements longitudinaux (28a,28b) sont prolongés par des fers constituant des points d'ancrage d'un compas hydraulique.

7. Benne selon l'une des revendications 1 à 6, **caractérisée en ce que** ladite tôle de contre-coup (35) recouvrant au moins une portion des bords latéraux supérieurs internes de la benne est constituée par une portion de recouvrement entre d'une part une face (33) dudit profilé (25a,25b) formant rebord supérieur et d'autre part une portion y accolée de la paroi de benne.

8. Benne selon l'une des revendications 1 à 7, **caractérisée en ce qu'**elle est équipée dans sa partie arrière d'un hayon basculable (27) formant paroi de fermeture arrière de la benne, et susceptible de s'escamoter lors du basculement de ladite benne pour permettre le déchargement des matériaux transportés.

## Patentansprüche

1. Kippermulde für das Lagern and Transportieren von Materialien wie Bruchsteine, bestehend aus einem offenen Aufnahmebehälter aus geschweißten Blechen, die eine Lagerbehälterwand (22) mit kreisbogenförmigem Querschnitt bilden, wobei die Mulde **dadurch gekennzeichnet ist, daß** sie folgendes aufweist:
- ein Aufprall- and Versteifungsblech (32a, 32b), das gegen einen Teil der Rückwand dieser Mulde in einer im wesentlichen kontinuierlichen and symmetrischen Weise im Verhältnis zu ihrer vertikalen Ebene angebaut ist, wobei dieses Aufprall und Versteifungsblech sich in Längsdirektion wesentlich auf der ganzen Länge der Mulde erstreckt;
- zwei Längsgestellteile (28a, 28b), die im wesentlichen parallel zur Längsachse der Mulde verlaufen, wobei diese Längsgestellteile einen selbsttragenden Rahmen bilden and so ausgelegt sind, daß sie auf den Längsträgern (41) eines Chassis ruhen können and deren Abstand verstellt werden kann, um sie verschiedenen Chassisgrößen anzupassen;
- Seitenränder, die jeweils aus einem Profil mit geschlossenem Querschnitt (25a, 25b) gebildet werden, die jeweils mit dem oberen Teil der Wand (22) fest verbunden sind, wobei ein Aufprallblech (35) fest mit mindestens einem Teil dieser Seitenränder verbunden ist;
- mindestens ein Paar der Versteifung dienender seitlicher Verstärkungsteile (23a, 23b; 24a, 24b), die symmetrisch auf beiden Seiten einer vertikalen Längsebene (39) der Mulde angebracht und aus Blechen ausgebildet sind, die fest mit der Wand (22), mit den Profilen (25a, 25b) and mit den Längsgestellteilen (28a, 28b) verbunden and mit ihnen im Dreieck angebrachte Gruppen bilden.

2. Mulde gemäß Anspruch 1,
**dadurch gekennzeichnet, daß** das Aufprallblech (32a, 32b) bis zu einer vorgegebenen Höhe der Seiten der Mulde reicht, so daß es sich seitlich im Verhältnis zur vertikalen Symmetrieebene der Mulde gemäß einem Öffnungswinkel (α) zwischen 30° and etwa 50° erstreckt, gemessen von der Mitte der oberen horizontalen Ebene der Mulde.

3. Mulde gemäß einem der Ansprüche 1 oder 2,
**dadurch gekennzeichnet, daß** die Bleche in etwa 5 mm stark sind and aus einer schlagfesten Legierung der Härte 400 HB bis 500 HB hergestellt sind.

4. Mulde gemäß einem der Ansprüche 1 bis 3,
**dadurch gekennzeichnet, daß** das Aufprallblech (32a, 32b) einen Block mit den Längsgestellteilen (28a, 28b) bildet.

5. Mulde gemäß einem der Anspruche 1 bis 4,
**dadurch gekennzeichnet, daß** der selbsttragende Rahmen auch mindestens zwei Querteile umfaßt, die mit den Längsgestellteilen (28a, 28b) zusammenwirken.

6. Mulde gemäß einem der Ansprüche 1 bis 5,
**dadurch gekennzeichnet, daß** die Längsgestellteile (28a, 28b) durch Eisenteile verlängert werden, die Befestigungspunkte für eine hydraulische Hebevorrichtung darstellen.

7. Mulde gemäß einem der Ansprüche 1 bis 6,
**dadurch gekennzeichnet, daß** das Aufprallblech (35), das mindestens einen Teil der oberen seitlichen Innenteile der Mulde bedeckt, einerseits aus einem Teil, das eine Fläche (33) des den oberen Rand bildenden Profils (25a, 25b) bedeckt and andererseits aus einem daran angesetzten Teils der Muldenwand zusammengesetzt ist.

8. Mulde gemäß einem der Anspruche 1 bis 7,
**dadurch gekennzeichnet, daß** sie mit einer hinteren Schwenkklappe (27) ausgestattet ist, welche die hintere Abschlußfläche der Mulde bildet and sich beim Kippen der Mulde aus dem Weg schwenken läßt, um das Entladen der transportierten Materialien zu ermöglichen.

## Claims

1. Tipper skip for storing and transporting materials such as rocks, consisting of an open container of welded sheet metal forming a storage wall (22) having a cross-section in the shape of an arc of a circle, the said skip being **characterised in that** it has:
- a resilience and stiffness plate (32a, 32b) rigidly attached to a portion of the bottom wall of the said skip in a manner which is essentially continuous and symmetrical with respect to the vertical plane of symmetry of the latter, wherein said resilience and stiffness plate extends in longitudinal direction substantially over the entire length of the skip;
- two longitudinal underframes (28a, 28b) extending essentially parallel to its longitudinal axis, the said longitudinal underframes forming a self-supporting frame and being designed to be able to bear on the side members (41) of a chassis and spaced to adapt to different sizes of chassis;
- lateral flanges each consisting of a closed section profile (25a, 25b) rigidly attached to the upper portion of the said wall (22), a resilience plate (35) being rigidly attached to at least a portion of the said lateral flanges;
- at least one pair of lateral reinforcements forming stiffeners (23a, 23b; 24a, 24b), arranged symmetrically on either side of the longitudinal vertical plane (39) of the skip and being formed by plates rigidly attached to the wall (22), to the profiles (25a, 25b) and to the said longitudinal underframes (28a, 28b) and forming with the latter triangulation assembly (sic).

2. Skip according to Claim 1, **characterised in that** the said resilience plate (32a, 32b) rises to a predetermined height on the sides of the said skip, so as to extend laterally with respect to the vertical plane of symmetry of the said skip, at an aperture angle (a) of between approximately 30° and approximately 50°, measured from the centre of the upper horizontal plane of the skip.

3. Skip according to either one of Claims 1 or 2, **characterised in that** the said plates have a thickness of approximately 5 mm and have been produced from shock-resistant alloy having a hardness of the order of 400 HB to 500 HB.

4. Skip according to one of Claims 1 to 3, **characterised in that** the said resilience plate (32a, 32b) is made in one piece with the said longitudinal underframes (28a, 28b).

5. Skip according to one of Claims 1 to 4, **characterised in that** the said self-supporting frame also has at least two cross-members interacting with the said longitudinal underframes (28a, 28b).

6. Skip according to one of Claims 1 to 5, **characterised in that** the said longitudinal underframes (28a, 28b) are extended by iron bars forming anchorage points for a hydraulic compass.

7. Skip according to one of Claims 1 to 6, **characterised in that** the said resilience plate (35) covering at least a portion of the interior upper lateral edges of the skip comprises a covering part between, on the one hand, a face (33) of the said profile (25a, 25b) forming the upper flange and, on the other hand, a part of the skip wall attached thereto.

8. Skip according to one of Claims 1 to 7, **characterised in that** it is equipped in its rear part with a tippable tailgate (27) forming the rear closing wall of the skip and capable of retracting during tipping of the said skip to allow discharge of the materials transported.
